# EUROPEAN PATENT SPECIFICATION

(11) **EP 2 498 553 B1**
(45) Date of publication and mention of the grant of the patent: **13.07.2016**
(21) Application number: 10828339.1
(22) Date of filing: 05.11.2010
(51) Int. Cl.: H04W 52/02, H04W 40/12, H04W 60/00

(54) **WIRELESS COMMUNICATION SYSTEM, RELAY STATION APPARATUS, AND WIRELESS COMMUNICATION METHOD**
DRAHTLOSES KOMMUNIKATIONSSYSTEM, RELAISSTATIONSVORRICHTUNG UND DRAHTLOSES KOMMUNIKATIONSVERFAHREN
SYSTÈME DE COMMUNICATION SANS FIL, APPAREIL DE STATION RELAIS ET PROCÉDÉ DE COMMUNICATION SANS FIL

(30) Priority: 05.11.2009 JP 2009253980
(43) Date of publication of application: 12.09.2012
(73) Proprietor: Sharp Kabushiki Kaisha, Osaka-shi, Osaka 545-8522 (JP)
(72) Inventor: TAKEHANA Shuichi, Osaka 545-8522 (JP); SUGAHARA, Shiro, Osaka 545-8522 (JP); FUKUMOTO, Shusaku, Osaka 545-8522 (JP); FUKUMASA, Hidenobu, Osaka 545-8522 (JP)
(74) Representative: Müller Hoffmann & Partner
(86) International application number: PCT/JP2010/069683
(87) International publication number: WO 2011/055780

(56) References cited:
- EP-A2- 1 890 405
- JP-A- 2001 053 887
- JP-A- 2003 134 552
- JP-A- 2008 048 202
- JP-A- 2009 246 508
- JP-A- 2009 510 835
- US-A1- 2008 108 303
- US-A1- 2009 247 072

## Description

### TECHNICAL FIELD

The present invention relates to a wireless communication system, a relay station apparatus, and a wireless communication method.

### BACKGROUND ART

In a fourth-generation cellular mobile communication system, it is necessary to implement a data communication speed of at least 1 Gpbs when stationary. Because the transfer bandwidth increases to 100 MHz and there is a migration of the carrier frequency to the 5 GHz band, both the power consumption and the propagation loss increase. Increasing the transmitting power to compensate for propagation loss leads to a rise of temperature and power consumption in the apparatus, and implementation is particularly difficult in a mobile station apparatus that is a mobile terminal, because of limited battery capacity. Although there is the method of using microcells or picocells, in which the cells are made small to reduce the propagation loss, the number of base station apparatuses increases and the infrastructure cost increases.

One method that is effective in solving the above-described problem is to use a relay station apparatus that relays signals between mobile station apparatuses and base station apparatuses (for example, Patent Reference 1). An in-band relay, in which communication between a base station apparatus and a mobile station apparatus and communication between a base station apparatus and a relay station apparatus coexist, is particularly effective, because it does not require the provision of a new frequency for relay communication.

With an in-band relay, however, there is a problem of resource allocation between communication between a base station apparatus and a relay station apparatus (relay link) and communication between a relay station apparatus and a mobile station apparatus (access link). Unless resources can be allocated well, mutual interference can occur between the relay link and the access link, and there can occur resources that cannot be effectively used in communication.

Relay station apparatuses are a Type-1, which has a physical cell ID that differs from the base station apparatus and a cell that differs from the base station apparatus, and a Type-2, which does not have differing cells. The Type-2 relay station apparatus does not have a physical cell ID, and does not necessarily need to transmit a synchronization channel or common reference channel, or other common control channels. The mobile station apparatus need not consider the existence of a relay station apparatus of the Type-2.

US 2009/247072 A discloses a relay station for relaying a radio communication between a radio terminal and a base station that includes a relay standby unit configured to, in a relay standby state, receive a connection request transmitted from the radio terminal to the base station in response to broadcast information from the base station; a connection request detector configured to, in a relay standby state, detect the connection request transmitted from the radio terminal to the base station; and a relay operation unit configured to relay a radio communication between the radio terminal and the base station when the relay station shifts from the relay standby state to a relay operation state in response to the connection request detected by the connection request detector in the relay standby state.

### Prior Art Documents

### Patent Documents

Patent Reference 1: Japanese Patent Application Publication No. JPA 2008-60951

### DISCLOSURE OF INVENTION

### Problem to be Solved by the Invention

In a conventional relay station apparatus, however, because a synchronization signal and a reference signal are constantly being transmitted to the mobile station apparatus, power is always consumed by the relay station apparatus, this leading to the problem of requiring large-scale power supply equipment.

The present invention was made in consideration of this type of situation, and has as an object to provide a wireless communication system, a relay station apparatus, and a wireless communication method that suppress power consumption by the relay station apparatus, and are capable of suppressing the scale of the power supply equipment for the relay station apparatus.

This object is solved by the subject-matter of the independent claims.

(1) A first aspect of the present invention is a wireless communication system comprising a base station apparatus, a mobile station apparatus that performs wireless communication with the base station apparatus, and a relay station apparatus that relays wireless communication between the base station apparatus and the mobile station apparatus, wherein the relay station apparatus switches between transmitting and not transmitting a synchronization signal or a reference signal to be transmitted to the mobile station apparatus.
(2) In the first aspect of the present invention, the relay station apparatus may have an idle mode, in which the synchronization signal and the reference signal are not transmitted, and an operating mode, in which the synchronization signal and the reference signal are transmitted, and wherein by switching the mode, switching may be done between transmission and non-transmission of the synchronization signal and the reference signal.
(3) In the first aspect of the present invention, when the relay station apparatus that is in the idle mode receives a paging signal from the base station apparatus, switching may be done to the operation mode.
(4) In the first aspect of the present invention, an equipment identification number that is to allocated to each of the mobile station apparatuses may be allocated to the relay station apparatus, and the paging signal may include the equipment identification number that is allocated to the relay station apparatus targeted by the paging signal.
(5) In the first aspect of the present invention, the relay station apparatus intermittently may receive the paging signal.
(6) In the first aspect of the present invention, when wireless communication is established between the base station apparatus and the mobile station apparatus, based on position registration information received in advance from the relay station apparatus, if the base station apparatus judges that the base station apparatus can communicate with the mobile station apparatus via the relay station apparatus, the paging signal may be transmitted to the relay station apparatus.
(7) In the first aspect of the present invention, the base station apparatus may receive position registration information from the relay station apparatus and registers the relay station apparatus into its base station apparatus.
(8) In the first aspect of the present invention, upon registration of the relay station apparatus into its base station apparatus, the base station apparatus may decide to allocate to the relay station apparatus that has transmitted the position registration information either the same cell identification information as its base station apparatus or separate cell identification information.
(9) In the first aspect of the present invention, upon registration of the relay station apparatus to the base station apparatus, the base station apparatus may decide cell identification information to be allocated to the relay station apparatus and notifies the relay station apparatus thereof.
(10) In the first aspect of the present invention, if the relay station apparatus has cell identification information that is different than that of the base station apparatus, the mobile station apparatus receives the reference signal of the relay station apparatus and measures the communication quality with the relay station apparatus; and wherein: based on the communication quality measured by the mobile station apparatus, the base station apparatus may determine whether or not wireless communication with the mobile station apparatus is performed via the relay station apparatus.
(11) In the first aspect of the present invention, if the relay station apparatus has a cell identification information that is the same as that of the base station apparatus, the mobile station apparatus receives the reference signal of the relay station apparatus and measures the communication quality with the relay station apparatus, and further receives the reference signal of the base station apparatus and measures the communication quality with the base station apparatus and wherein: based on the communication quality measured by the mobile station apparatus, the base station apparatus may determine whether or not wireless communication with the mobile station apparatus is performed via the relay station apparatus.
(12) A second aspect of the present invention is a relay station apparatus relaying wireless communication between a base station apparatus and a mobile station apparatus that performs wireless communication with the base station apparatus; wherein: the relay station apparatus switches between transmitting and not transmitting a synchronization signal or a reference signal to be transmitted to the mobile station apparatus.
(13) A third aspect of the present invention is a wireless communication method in a wireless communication system comprising a base station apparatus, a mobile station apparatus that performs wireless communication with the base station apparatus, and a relay station apparatus that relays wireless communication between the base station apparatus and the mobile station apparatus, the wireless communication method comprising: switching, by the relay station apparatus, between transmitting and not transmitting a synchronization signal or a reference signal to be transmitted to the mobile station apparatus.

### Effect of the Invention

According to the present invention, it is possible to suppress power consumption by the relay station apparatus, and to suppress the scale of the power supply equipment for the relay station apparatus.

### BRIEF DESCRIPTION OF THE DRAWINGS

FIG. 1 is a simplified block diagram showing the constitution of a wireless communication system 10 in a first embodiment of the present invention.
FIG. 2 is a simplified block diagram showing the constitution of a relay station apparatus 3 in the same embodiment.
FIG. 3 is a simplified block diagram showing the constitution of a base station apparatus 1 in the same embodiment.
FIG. 4 is a flowchart showing an example of the operation up until the relay station apparatus 3 goes into the operating mode in the same embodiment.
FIG. 5 is a sequence diagram showing the operation from the waiting state up until communication via the relay station apparatus 3 in the same embodiment.
FIG. 6 is a drawing showing an example of the handover sequence of the mobile station apparatus 2 in the same embodiment.
FIG. 7 is a sequence diagram describing the transition of the relay station apparatus 3 from the operating mode to the idle mode in the same embodiment.
FIG. 8 is a sequence diagram describing the operation of a wireless communication system in a variation of the same embodiment.
FIG. 9 is a flowchart showing an example of the operation up until the relay station apparatus 3 goes into the operating mode in a second embodiment of the present invention.
FIG. 10 is a drawing showing an example of the handover sequence of the mobile station apparatus 2 in the same embodiment.
FIG. 11 is a sequence diagram describing the operation of the wireless communication system in a variation of the same embodiment.

### BEST MODE FOR CARRYING OUT THE INVENTION

### (First Embodiment)

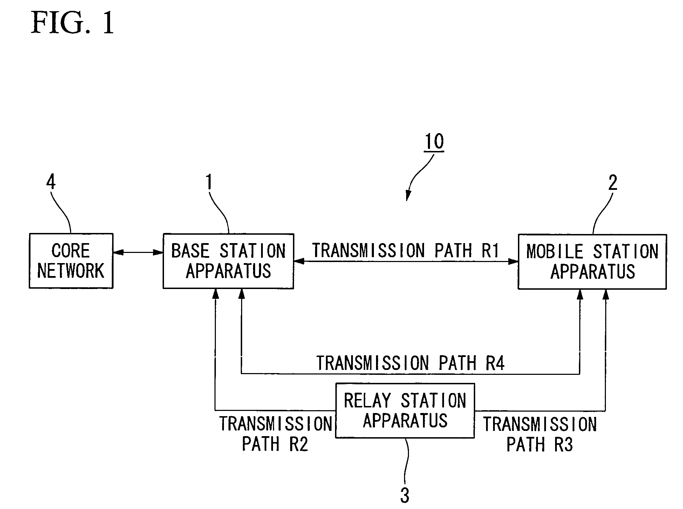

A wireless communication system according to the first embodiment of the present invention will be described below, with references made to the drawings. FIG. 1 is a simplified block diagram showing the constitution of the wireless communication system 10 in the present embodiment. The wireless communication system 10 has a base station apparatus 1, a mobile station apparatus 2, a relay station apparatus 3, and a core network 4. The base station apparatus 1 has a communication area service, and can perform wireless communication with a plurality of mobile station apparatuses 2 within a communication area. The mobile station apparatus 2 is a mobile communication terminal that is used in the wireless communication system 10.

The relay station apparatus 3, by relaying wireless communication between the base station apparatus 1 and the mobile station apparatus 2, is disposed with the object of, for example, expanding the communication service area of the base station apparatus 1 and improving the communication quality, and has a specific communication service area. In the case of communication between the mobile station apparatus 2 and the base station apparatus 1, by performing relay communication via the relay station apparatus 3, serves to expand the communication service area of the base station apparatus 2 and to improve the quality of communication. Also, the relay station apparatus 3 switches between transmitting and not transmitting a synchronization signal or a reference signal that is transmitted to the mobile station apparatus 2. The core network 4 is connected to the base station apparatus 1 and makes connection between base station apparatuses 2 and with an external network or the like. Although a plurality of base station apparatuses 1 are connected to the core network 4, they are not shown in FIG. 1.

Also, to expand the service area of one base station apparatus 1 with regard to a relay station apparatus 3, although there are cases in which a plurality of relay station apparatuses 3 are provided, these are not shown in FIG. 1.

Let the wireless communication transmission path between a base station apparatus 1 and the mobile station apparatus 2 be a transmission path R1, let the wireless communication transmission path between a base station apparatus 1 and a relay station apparatus 3 be the transmission path be R2, and let the wireless communication transmission path between the relay station apparatus 3 and the mobile station apparatus 2 be a transmission path R3. Further, let the transmission path from the base station apparatus 1 to the mobile station apparatus 2 via the relay station apparatus 3 be the transmission path R4.

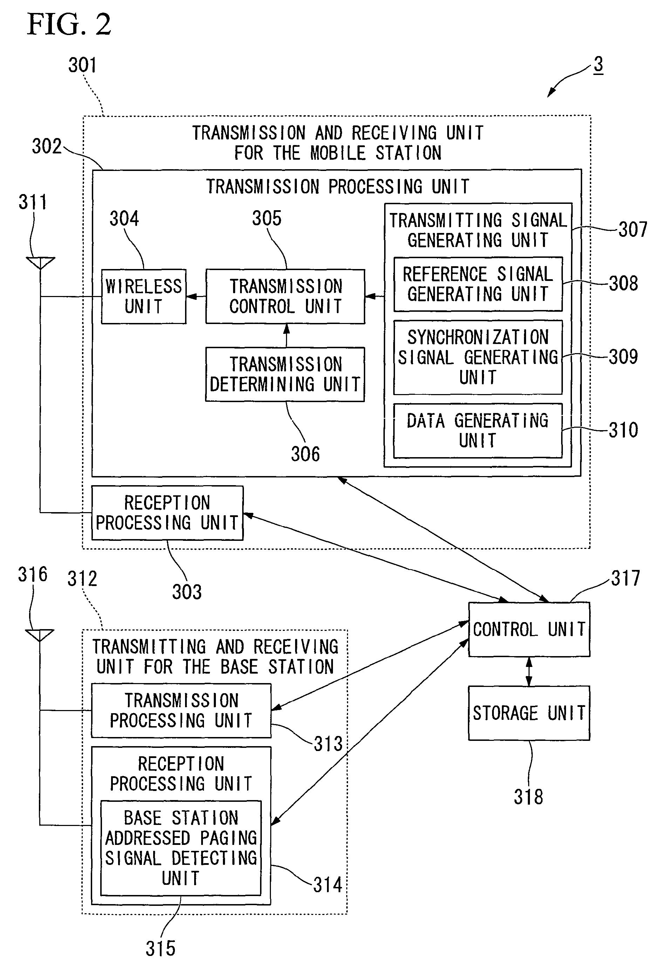

FIG. 2 is a simplified block diagram showing the constitution of the relay station apparatus 3. The relay station apparatus 3 has a transmitting and receiving unit 301 for the mobile station, a transmitting and receiving unit 312 for the base station, a control unit 317, a storage unit 318, an antenna 311 for the mobile station, and an antenna 316 for the base station. The transmitting and receiving unit 301 for the mobile station has a transmission processing unit 302 and a reception processing unit 303. The transmission processing unit 302 has a wireless unit 304, a transmission control unit 305, a transmission determining unit 306, and a transmitting signal generating unit 307. The transmitting signal generating unit 307 has a reference signal generating unit 308, a synchronization signal generating unit 309, and a data generating unit 310. The transmitting and receiving unit 312 for the base station has a transmission processing unit 313 and a reception processing unit 314. The reception processing unit 314 has a base station addressed paging signal detecting unit 315.

The transmitting and receiving unit 301 for the mobile station perform wireless communication with the mobile station apparatus 2 via the antenna 311 for the mobile station. The transmission processing unit 302 of the transmitting and receiving unit 301 for the mobile station modulates data to be transmitted to the mobile station apparatus 2, such as user data received from the base station apparatus 1 and control data, multiplexes a reference signal and a synchronization signal, and generates a signal to be transmitted to the base station apparatus 1. The transmission processing unit 302 up-converts this generated signal to a wireless frequency and transmits it to the mobile station apparatus 2 via the antenna 311 for the mobile station. The reception processing unit 303 of the transmitting and receiving unit 301 for the mobile station receives the signal from the mobile station apparatus 2 via the antenna 311 for the mobile station, and down-converts the signal to a baseband signal. The reception processing unit 303 demodulates the baseband signal and detects user data and control data.

The transmitting and receiving unit 312 for the base station performs wireless communication with the mobile station apparatus 1 via the antenna 316 for the base station. The transmission processing unit 313 of the transmitting and receiving unit 312 for the base station modulates data to be transmitted to the base station 1, such as user data received from the mobile station apparatus 2, and control data, and generates a signal to be transmitted to the base station apparatus 1. The transmission processing unit 313 up-converts the generated signal to a wireless frequency, and transmits the signal to the base station apparatus 1 via the antenna 316 for the base station. The reception processing unit 314 of the transmitting and receiving unit 310 for the base station receives the signal from the base station apparatus 1 via the antenna 316 for the base station, and down-converts it to a baseband signal. The reception processing unit 314 demodulates the baseband signal and detects user data and control data. The base station addressed paging signal detecting unit 315 detects as a paging signal addressed to it, the paging signal that includes its own equipment identification number (IMEI: International Mobile Equipment Identifier), which is set from the control unit 313.

The reference signal generating unit 308 generates a reference signal (RS) that is transmitted to the mobile station apparatus 2. The mobile station apparatus 2 receives the reference signal and measures the received power of the reference signal to enable prediction of the communication quality on the transmission path R3 with the relay station apparatus 3. The synchronization signal generating unit 309 generates a synchronization signal that is transmitted to the mobile station apparatus 2. By receiving the synchronization signal corresponding, for example, to the P-SCH (Primary Synchronization Channel) and S-SCH (Secondary Synchronization Channel) in a 3GPP (3^{rd} Generation Partnership Project) LTE (Long Term Evolution; 3^{rd} Generation), the mobile station apparatus 2 establishes temporal synchronization with the relay station apparatus 3.

The data generating unit 310 receives from the base station apparatus 1 data and control signals to be transmitted to the mobile station apparatus 3. The transmitting signal generating unit 307 modulates and multiplexes the signals generated by the reference signal generating unit 308, the synchronization signal generating unit 309, and the data generating unit 310, and generates a baseband signal. The transmission control unit 305 receives the control signals output from the transmission determining unit 306 and, by switching between performing and not performing output to the wireless unit 304 of the signals generated by the transmitting signal generating unit 306 (including the synchronization signal and reference signal), controls the switching between transmission and non-transmission. In this manner, the relay station apparatus 3 has a function of controlling the switching between transmission and non-transmission, and when communication is not being performed with the mobile station apparatus 2, stops the transmission of the unnecessary synchronization signal and reference signal, thereby enabling a reduction of the power consumed by the relay station apparatus 3. It is also possible to reduce the interference to other base station apparatuses, relay station apparatuses, and mobile station apparatuses that occurs when the synchronization signal and reference signal are transmitted. When the relay station apparatus 3 is in the operating mode, the transmission determining unit 306 controls the transmission control unit 305 so as to output a signal, and when the relay station apparatus 3 is in the idle mode, the transmission determining unit 306 controls the transmission control unit 305 so as not to output a signal. By this transmission determining unit 306, the relay station apparatus 3 has an idle mode in which the synchronization signal and the reference signal are not transmitted, and an operating mode in which the synchronization signal and the reference signal are transmitted, and by switching the mode, switching is done of transmission and non-transmission of the synchronization signal and the reference signal. The wireless unit 304 up-converts the baseband signal output by the transmission control unit 305 to a wireless frequency.

The control unit 317 is a block that performs overall control of the relay station apparatus 3, performing switching between the idle mode and the operating mode of the relay station apparatus 3, in accordance with an instruction from the base station apparatus 1. The storage unit 318 stores an equipment identification number allocated to the relay station apparatus 3 (IMEI: International Mobile Equipment Identifier). When detection is made of the reception on the paging channel (PCH) transmitted from the base station apparatus 1, which is addressed to its own apparatus of this equipment identification number, the control unit 317 of the relay station apparatus 3 performs switching from the idle mode to the operating mode. There are Type-1 relay station apparatuses 3 that have a cell ID (cell identification information) that differs from the base station apparatus 1, and Type-2 relay station apparatuses 3 that have a cell ID that is the same as the base station apparatus 1. There are also base station apparatuses 3 that can accommodate both Type-1 and Type-2.

In the present embodiment, the description is for the case in which the base station apparatus 1 and the relay station apparatus 3 have different cell IDs. In the case of performing data transmission and reception between the base station apparatus 1 and the mobile station apparatus 2, it is possible to do this using only the transmission path R1. It is also possible to perform communication via the relay station apparatus 3 using only the transmission path R4. Transmission and reception between the base station apparatus 1 and the mobile station apparatus 2 are also possible using a combination of the transmission path R1 and the transmission path R4.

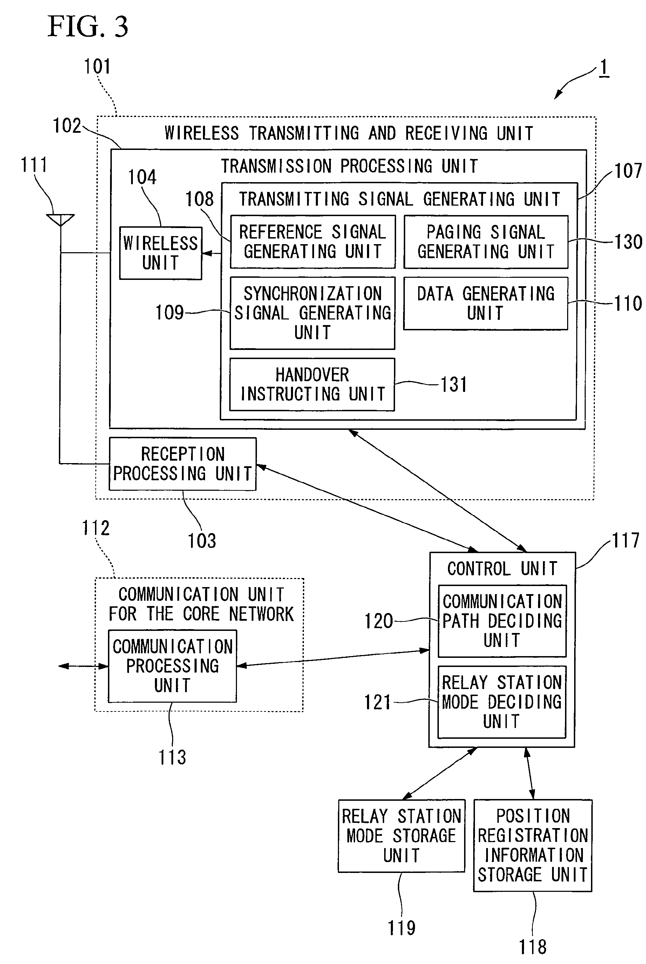

FIG. 3 is a simplified block diagram showing the constitution of the base station apparatus 1. The base station apparatus 1 has a wireless transmitting and receiving unit 101, a communication unit 112 for the core network, a control unit 117, a position registration information storage unit 118, a relay station mode storage unit 119, and an antenna 111. The wireless transmitting and receiving unit 101 has a transmission processing unit 102 and a reception processing unit 103. The transmission processing unit 102 has a wireless unit 104 and a transmitting signal generating unit 107. The transmitting signal generating unit 107 has a reference signal generating unit 108, a synchronization signal generating unit 109, a data generating unit 110, a paging signal generating unit 130, and handover instructing unit 131. The control unit 117 has a communication path deciding unit 120 and a relay station mode deciding unit 121.

The wireless transmitting and receiving unit 101 performs wireless communication with the mobile station apparatus 2 and the relay station apparatus 3 via the antenna 111. The transmission processing unit 102 of the wireless transmitting and receiving unit 101 modulates data to be transmitted to the mobile station apparatus 2, such as user data received from the core network 4 and data to be transmitted to the relay station apparatus 3 such as control data including handover command and paging, multiplexes the reference signal and the synchronization signal, and generates signals to be transmitted to the mobile station apparatus 2 and the relay station apparatus 3. The transmitting processing unit 102 up-converts this generated signal to a wireless frequency and transmits it to the mobile station apparatus 2 and the relay station apparatus 3, via the antenna 111. The reception processing unit 103 of the wireless transmitting and receiving unit 101 receives the signals from the mobile station apparatus 2 and the relay station apparatus 3 via the antenna 111, and down-converts the signals to baseband signals. The reception processing unit 103 demodulates the baseband signals and detects user data and control data.

The reference signal generating unit 108 generates the reference signal that is transmitted to the mobile station apparatus 2 and the relay station apparatus 3. The mobile station apparatus 2 receives this reference signal and measures the received power of the reference signal to enable prediction of the communication quality on the transmission path R1 with the relay station apparatus 3. The mobile station apparatus 2 receives this reference signal via the relay station apparatus 3 and can predict the communication quality on the transmission path R4. The relay station apparatus 3 receives this reference signal and can predict the communication quality on the transmission path R2. The synchronization signal generating unit 309 generates a synchronization signal that is to be transmitted to the mobile station apparatus 2.

The communication unit 112 for the core network is connected to the core network 4, and communicates with a server that provides service to other base station apparatuses and mobile station apparatuses 2, via the core network 4. The control unit 117 is a block that performs overall control of the base station apparatus 1. The communication path deciding unit 120 of the control unit 117 decides whether communication between the base station apparatus 1 and the mobile station apparatus 2 is to be performed using the transmission path R1, or whether it is to be performed using the transmission path R4, via the relay station apparatus 3. The relay station mode deciding unit 121, in response to the result of the determination by the communication path deciding unit 120, determines the mode of the relay station apparatus 3, and causes the relay station mode storage unit 119 to store that result. If the result of the determination is that the relay station apparatus 3 is to be transitioned from the idle mode to the operating mode, the relay station mode deciding unit 121 instructs the transmission processing unit 102 to transmit a paging signal to that relay station apparatus 3. The position registration information storage unit 118 stores the position registration information of the mobile station apparatus 2 and the relay station apparatus 3, the positions of which were registered in the base station apparatus 1. The position registration information includes an equipment identification number. The base station apparatus 1 receives the position registration information from the relay station apparatus 3 and the mobile station apparatus 2 and stores that position registration information in the position registration information storage unit 118, so as to register that relay station apparatus 3 and mobile station apparatus 2 into the base station apparatus 1. The relay station mode storage unit 119 stores the mode of the relay station apparatus 3, the position of which was registered.

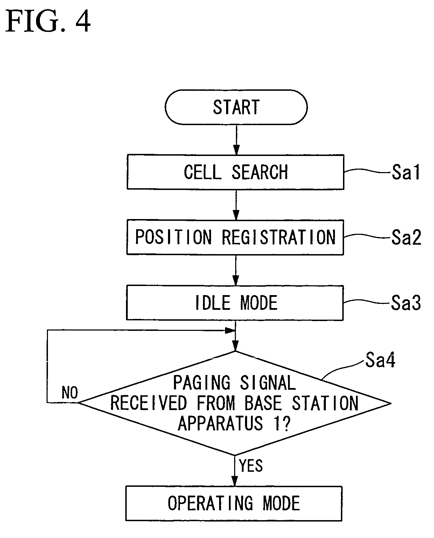

FIG. 4 is a flowchart showing an example of the operation up until the relay station apparatus 3 goes into the operating mode. After the power supply is started, the reception processing unit 314 of the relay station apparatus 3 receives the synchronization signal from the base station apparatus 1 and performs a cell search, after which it receives a notification signal from the base station apparatus 1 (Sa1). Then, the control unit 317 of the relay station apparatus 3 reads out the equipment identification number from the storage unit 318, and transmits a message that request a position registration and that includes this equipment identification number to the base station apparatus 1, using the transmission processing unit 313 (Sa2). Upon receiving the position registration complete message from the base station apparatus 1, a transition is made to the idle mode (Sa3).

The relay station apparatus 3 transmits to the base station apparatus 1 not only the message requesting a position registration at step Sa2, but also the equipment identification number and capability information of the base station apparatus 3. The relay station apparatus 3 performs position registration processing in the same manner as the mobile station apparatus 2, and by the relay station apparatus 3 having an equipment identification number for the relay station apparatus that is not used for the mobile station apparatus 2, the base station apparatus 1 can recognize that this is position registration information from the relay station apparatus 3. The information that is transmitted as capability information is, for example, the type of relaying that the relay station apparatus 3 handles and the specification that the relay station apparatus 3 accommodates.

The base station apparatus 1 that received the capability information decides whether the relay type with respect to the relay station apparatus 3 is the type (Type-1) that has a unique cell ID that differs from the base station apparatus 1, or the type (Type-2) that has a cell ID that is the same as the base station apparatus 1, and issues an instruction. When this occurs, the method of deciding the relaying type of the relay station apparatus 3 by the base station apparatus 1 is to decide this as Type-2 in the case in which the object is to expand the service area, and to decide this as Type-1 in the case in which the object is to improve the communication capacity within the service area. In addition, there is a method for deciding in which, in the case in which there is a cell ID that can be allocated to the relay station apparatus 3, the type is made Type-2, and in the case in which there is no cell ID or a cell ID less than a certain number that can be assigned, the type is made Type-1. In the case in which a relay station apparatus 3 capable of accommodating both Type-1 and Type-2 within the area in which the base station apparatus 1 can communicate, because it is possible to adaptively change the relay type of the relay station apparatus 3 in accordance with an instruction from the base station apparatus 1, depending upon the number of relay station apparatuses 3 belonging to the base station apparatus 1 and the communication conditions, it is possible for the base station apparatus 1 to perform communication efficiently.

Along with the decision as to the relay type, a cell ID may be assigned to a Type-1 relay station apparatus 3, and a notification thereof may be made. Because the number of cell IDs is finite, in the case in which the number of Type-1 relay station apparatuses 3 belonging to a base station apparatus 1 is increased, there may be cases in which the number of cell IDs becomes insufficient. In such a case, rather than assigning fixed cell IDs to relay station apparatuses 3, it is possible to change the allocation of cell IDs in response to the communication conditions within the area of the base station apparatus 1.

Returning to FIG. 4, when a relay station apparatus 3 transitions to the idle mode, the idle mode persists until reception of a paging signal from the base station apparatus 1 (Yes at Sa4). When this occurs, in order to reduce the current consumption, the relay station apparatus 3 may intermittently receive the paging signal. When the relay station apparatus 3 receives a paging signal addressed to it from the base station apparatus 1, it transitions to the operating mode (Yes at Sa4).

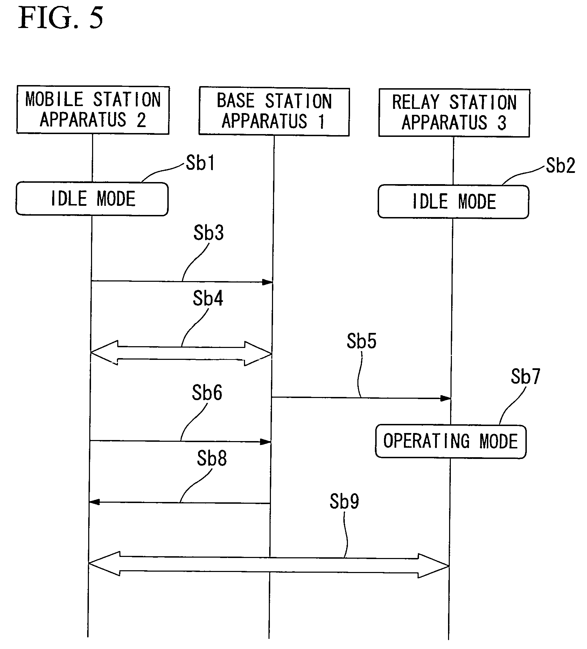

FIG. 5 is a sequence diagram showing the operation from the waiting state up until the communication via the relay station apparatus 3. The relay station apparatus 3 and the mobile station apparatus 2 each perform position registration with respect to the base station apparatus 1, and are in the idle mode state (Sb1, Sb2). When this is done, the position registration information storage unit 118 of the base station apparatus 1 stores the position registration information and the equipment identification number of the relay station apparatus 3 and the position registration information and the equipment identification number of the mobile station apparatus 2. The relay station mode storage unit 119 stores that the relay station apparatus 3 is in the idle mode. Because the relay station apparatus 3 is in the idle mode, its base station addressed paging signal detecting unit 315 monitors the paging channel, including the terminal identification number read out from the storage unit 318 by the control unit 317.

At this point, the case in which a call connection is made to the base station apparatus 1 from the mobile station apparatus 2, such as when e-mail is transmitted by a user operation of the mobile station apparatus 2 will be described. A call connection request is made to the base station apparatus 1 from the mobile station apparatus 2 (Sb3: Connection request) and, if this succeeds, a communication path is established between the mobile station apparatus 2 and the base station apparatus 1 and the communication condition occurs (Sb4: Communication in progress). In this case, if wireless communication is established between the base station apparatus 1 and the mobile station apparatus 2, based on the position registration information received in advance from the relay station apparatus 30, the communication path deciding unit 120 of the base station apparatus 1 makes the judgment that communication with the mobile station apparatus 2 is possible via the relay station apparatus 3. The method of determining that communication is possible via the relay station apparatus 3 is as described below. The base station apparatus 1, based on the received power of the signal transmitted from the mobile station apparatus 2 or the information reported from the mobile station apparatus 2 (downlink signal received level) or the like, predicts the approximate position of the mobile station apparatus 2, and judges whether or not it is possible to communicate via the relay station apparatus 3. It is also possible to receive a position measured by the mobile station apparatus 2 using GPS (Global Positioning System) or the like from the mobile station apparatus 2 and, by judging whether or not this position is within the communication area of the base station apparatus 3, to judge whether or not communication is possible via the relay station apparatus 3.

When a judgment is made that communication is possible via the relay station apparatus 3, as described above, the communication path deciding unit 120 references the relay station mode storage unit 119 and, because the relay station apparatus 3 is in the idle mode, the terminal identification number thereof is read out from the position registration information storage unit 118 and the transmission processing unit 102 is instructed to transmit a paging signal that includes the terminal identification number. At the transmission processing unit 102, the paging signal generating unit 130 thereof generates a paging signal that includes the terminal identification number specified by the communication path deciding unit 120, and transmits this via the wireless unit 104 and the antenna 111, so that the base station apparatus 1 pages the relay station apparatus 3 (Sb5: Paging).

At this point in time, the base station apparatus 1 cannot obtain accurate information regarding the communication quality between the mobile station apparatus 2 and the relay station apparatus 3, that is, on the transmission path R3. However, the communication path deciding unit 120 can select a relay station apparatus 3 capable of relaying a signal of the mobile station apparatus 2, from communication quality between the base station apparatus 1 and the mobile station apparatus 2, that is, on the transmission path, or the position registration information of the mobile station apparatus 2 and the relay station apparatus 3, and can transmit the paging signal addressed to the relay station apparatus 3. The base station apparatus 1 can also transmit the paging signal to a plurality of relay station apparatuses 3 within the communication area.

At the relay station apparatus 3, the base station addressed paging signal detecting unit 315 detects a paging signal from a signal received from the base station apparatus 1 a paging signal that includes its own terminal identification number. Additionally, receiving the results of the detection, the control unit 317 transitions the entire relay station apparatus 3 from the idle mode to the operating mode (Sb7). Having gone into the operating mode, in the relay station apparatus 3, in response to going into the operating mode, the transmission determining unit 306 controls transmission control unit 305 so as to output a signal to the wireless 304, starting the transmission of a downlink signal that includes the synchronization signal and the reference signal. When the relay station apparatus 3 transitions into the operating mode and communication between the base station apparatus 1 and the relay station apparatus 3 is established, the control unit 117 of the base station apparatus 1 acquires communication resources for the purpose of communication with the relay station apparatus 3. The relay station apparatus 3 may start the transmission of a downlink signal after the establishment of communication with the base station apparatus 1.

In this case, the relay station apparatus 3 has a cell ID that is different from that of the base station apparatus 1, and a mobile station apparatus 2 existing in an area in which communication with the relay station apparatus 3 is possible can receive a synchronization signal and a reference signal from the relay station apparatus 3, the mobile station apparatus 2 receiving the reference signal and measuring the communication quality with the relay station apparatus 3. The mobile station apparatus 2 reports the result of measuring the communication quality to the base station apparatus 1 (Sb6: Communication quality report). The communication path deciding unit 120 of the base station apparatus 1, in accordance with, for example, whether or not the report measurement result exceeds a threshold value set ahead of time, determines whether or not the communication quality between the mobile station apparatus 2 and the relay station apparatus 3 is good. If the determination is that it is good, the control unit 117 instructs the transmission processing unit 102 to generate a handover command that instructs the mobile station apparatus 2 to handover to the relay station apparatus 3. When the transmission processing unit 102 receives this instruction, the handover instructing unit 131 thereof generates an instruction for handover from the base station apparatus 1 to the relay station apparatus 3, and transmits it via the wireless unit 104 and the antenna 111 (Sb8: handover command). The mobile station apparatus 2 that receives the handover instruction from the base station apparatus 1 executes a handover sequence and, after the completion of handover to the relay station apparatus 3, continues communication with the relay station apparatus 3 (Sb9: Communication in progress).

At this point, the case in which the relay station apparatus 3 has a cell ID that is different from that of the base station apparatus 1 and in which the cell ID is assigned at the time of the registration of the position of the relay station apparatus 3 has been described. However, the cell ID may be assigned at the time of transition of the relay station apparatus 3 to the operating mode, by including the cell ID in the paging signal for the purpose of transitioning the base station apparatus 3 from the idle mode to the operating mode.

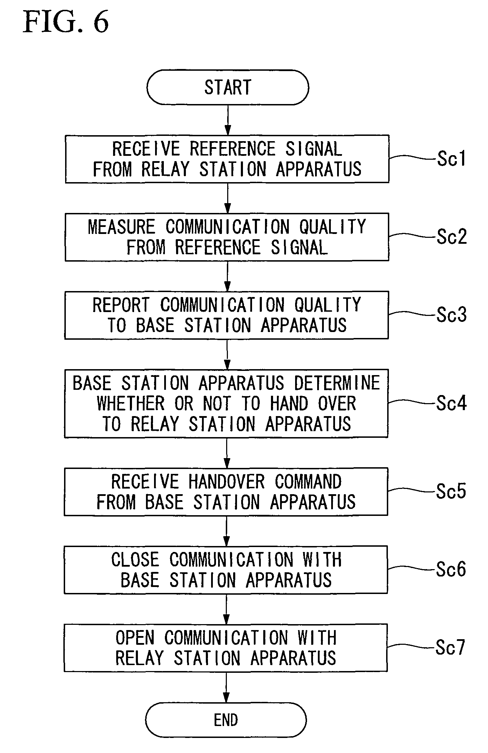

FIG. 6 is a drawing showing one example of the mobile station apparatus 2 handover sequence. The mobile station apparatus 2 receives a reference signal transmitted from the relay station apparatus 3 (Sc1) and measures the quality of communication with the relay station apparatus 3 (Sc2). The mobile station apparatus 2 transmits the result of measuring the communication quality to the base station apparatus 1 (Sc3). At the base station apparatus 1 that received the communication quality measurement result from the mobile station apparatus 2, the communication path deciding unit 120 judges, from the measurement result, whether or not to handover the communication with the mobile station apparatus 2 to the relay station apparatus 3 (Sc4). If handover to the relay station apparatus 3 is judged to be optimum, the communication path deciding unit 120 causes the transmission processing unit 102 to transmit a handover command to the mobile station apparatus 2. The mobile station apparatus 2 that received the handover command from the base station apparatus 1 (Sc5) closes communication with the base station apparatus 1 (Sc6), and opens communication with the relay station apparatus 3 specified by the handover command (Sc7).

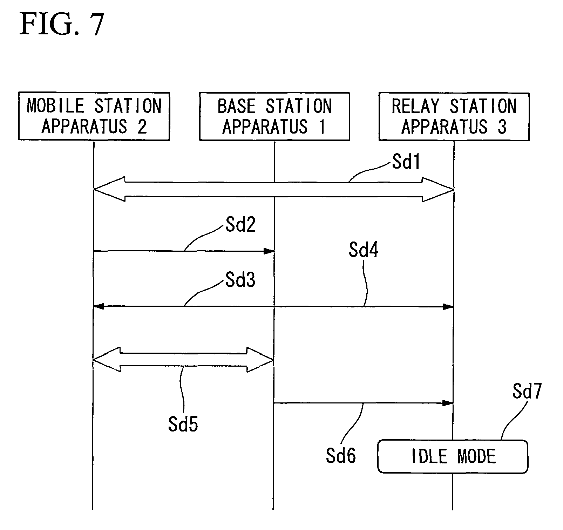

FIG. 7 is a sequence diagram describing the transition of the relay station apparatus 3 from the operating mode to the idle mode. In the condition in which communication is being performed between the base station apparatus 1 and the mobile station apparatus 2 via the relay station apparatus 3 (Sd1: Communication in progress), the mobile station apparatus 2 measures the communication quality by the received signal from the relay station apparatus 3. The mobile station apparatus 2 periodically reports the communication quality measurement result to the base station apparatus 1 via the relay station apparatus 3 (Sd2: Communication quality report). The base station apparatus 1 receives the communication quality measurement result from the mobile station apparatus 2, and the communication path deciding unit 120 thereof, based on the received measurement result, decides the path of communication with the mobile station apparatus 2. In this case, the decided communication path is the transmission path R1, which directly communicates with the base station apparatus 1.

Receiving the decision, the communication path deciding unit 120 transmits a handover command that causes the mobile station apparatus 2 to directly communicate with the base station apparatus 1 to each of the relay station apparatus 3 and the mobile station apparatus 2 (Sd3: Handover command, Sd4: Handover command). The mobile station apparatus 2 that received this handover command via the relay station apparatus 3 closes communication with the relay station apparatus 3 and subsequently opens communication with the base station apparatus 1 (Sd5: Communication in progress). When the mobile station apparatus 2 that is currently communicating with the relay station apparatus 3 no longer exists, in order to place that relay station apparatus 3 into the idle mode, the relay station mode deciding unit 121 of the base station apparatus 1 generates an idle mode transition command and causes the transmission processing unit 102 to transmit it (Sd6: Idle mode transition command). After communication with the mobile station apparatus 2 is closed, the relay station apparatus 3, upon reception of the idle mode transition command from the base station apparatus 1, transitions to the idle mode (Sd7). Alternatively, even in the case in which there is no idle mode transition command from the base station apparatus 1, in the case in which there is no mobile station apparatus 2 currently communicating other than the above-noted mobile station apparatus 2, the transition to the idle mode may be done by determination by the relay station apparatus 3. The transmission determining unit 306 of the relay station apparatus 3 detects the transition to the idle mode, and controls the transmission control unit 305 so that it does not output the signal generated by transmitting signal generating unit 307 to the wireless unit 304. By doing this, the relay station apparatus 3 stops transmitting the synchronization signal and the reference signal that it had been transmitting.

Although the description of the present embodiment has been for the case in which the relay station apparatus 3 is allocated a cell ID that is different from that of the base station apparatus 1, the case in which the same cell ID is allocated will be described below as a variation of the present embodiment.

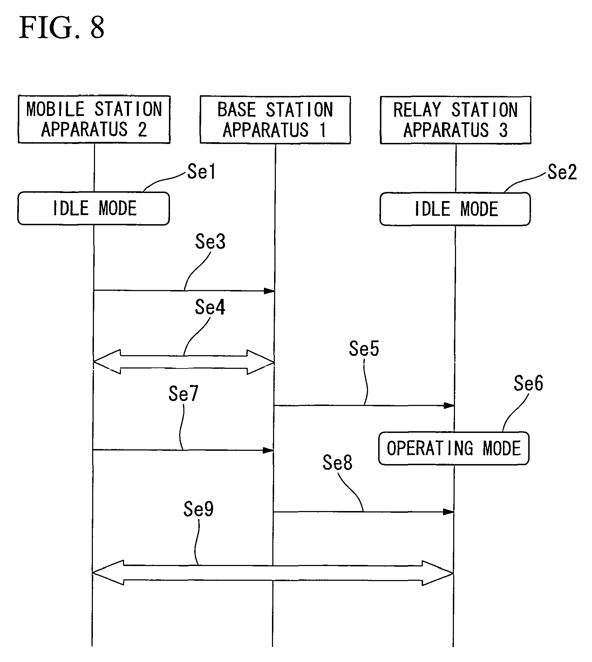

FIG. 8 is a sequence diagram describing the operation of the wireless communication system 10 in the present variation example. The relay station apparatus 3 and the mobile station apparatus 2 each perform position registration with respect to the base station apparatus 1, and are in the idle mode state (Se1, Se2). In the idle mode, the relay station apparatus 3 monitors the paging signal from the base station apparatus 1.

In this case, the case in which a call connection is made from the mobile station apparatus 2 with respect to the base station apparatus 1 will be described. A connection request is made from the mobile station apparatus 2 to the base station apparatus 1 (Se3: Connection request) and, if this succeeds, a communication path is established between the mobile station apparatus 2 and the base station apparatus 1 and the communication condition occurs (Se4: Communication in progress). In this manner, when the communication condition exists between the base station apparatus 1 and the mobile station apparatus 2, the base station apparatus 1, taking into consideration, for example, the position registration information of a relay station apparatus 3 that is in the idle condition, judges that it is possible to communicate between the base station apparatus 1 and the mobile station apparatus 2 via the relay station apparatus 3. In accordance with this judgment result, the base station apparatus 1, in order to communicate with the mobile station apparatus 2 via the relay station apparatus 3, transmits a paging signal to the relay station apparatus 3 that is in the idle state (Se5: Paging). The relay station apparatus 3, upon reception of the paging signal from the base station apparatus 1, transitions to the operating mode (Se6). When communication is established between the base station apparatus 1 and the relay station apparatus 3, communication resources for the purpose of communication with the relay station apparatus 3 are acquired by the base station apparatus 1. After establishment of communication with the base station apparatus 1, the relay station apparatus 3 starts transmitting a downlink signal that includes the synchronization signal and the reference signal.

In this case, the relay station apparatus 3 has the same cell ID as that of the base station apparatus 1, and also the base station apparatus 1 and the relay station apparatus adjust the timing in transmitting the synchronization signal and the reference signal. For this reason, the mobile station apparatus 2 that exists within an area in which communication with the relay station apparatus 3 is possible cannot distinguish the received synchronization signal and reference signal as having been transmitted from the base station apparatus 1 or having been transmitted from the relay station apparatus 3. Therefore, the mobile station apparatus 2 receives a signal that is synthesized from the reference signal from the base station apparatus 1 and the reference signal from the relay station apparatus 3 and measures the communication quality therefrom. The mobile station apparatus 2 reports the measurement result of the received quality to the base station apparatus 1 (Se7: Communication quality report). In this case, the base station apparatus 1, based on this measurement result, judges that good communication quality will result by using the relay station apparatus 3 in communication with the mobile station apparatus 2. The base station apparatus 1 instructs the relay station apparatus 3 to start relay communication (Se8: Relay communication start). Receiving this instruction, the relay station apparatus 3 relays wireless communication between the base station apparatus 1 and the mobile station apparatus 2 (Se9: Communication in progress). When this occurs, the wireless communication between the base station apparatus 1 and the mobile station apparatus 2 can be performed using both the transmission path R1 and the transmission path R4 that are shown in FIG. 1, and can be performed using only the transmission path R4.

### [Second Embodiment]

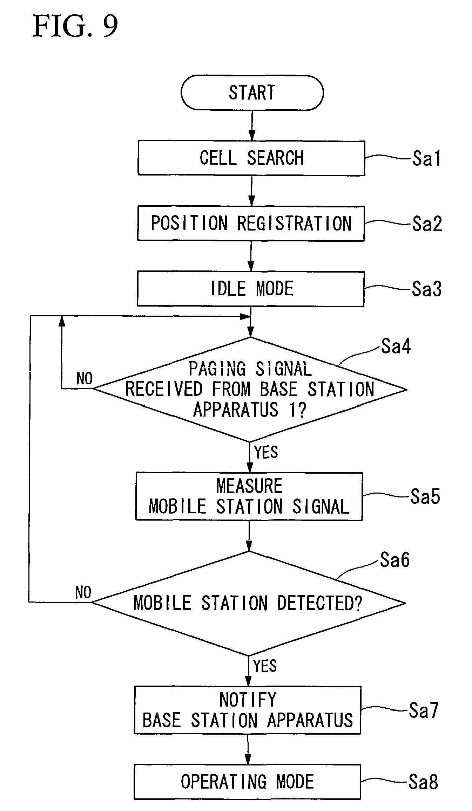

The second embodiment of the present invention will be described below. Elements that are in common with elements in the block diagrams of FIG. 1 to FIG. 3 are not described herein. The points of difference with respect to the first embodiment will be described using the flowchart and sequence diagrams of FIG. 9 to FIG. 11.

FIG. 9 is a flowchart showing an example of another operation up until the relay station apparatus 3 going into the operating mode. After the power supply is started, the reception processing unit 314 of the relay station apparatus 3 receives the synchronization signal from the base station apparatus 1 and performs a cell search, after which it receives a notification signal from the base station apparatus 1 (Sa1). Then, the control unit 317 of the relay station apparatus 3 reads out the equipment identification number from the storage unit 318, and transmits a message that request a position registration and that includes this equipment identification number to the base station apparatus 1, using the transmission processing unit 313 (Sa2). Upon receiving the position registration complete message from the base station apparatus 1, a transition is made to the idle mode (Sa3).

The relay station apparatus 3 transmits to the base station apparatus 1 not only the message requesting a position registration at step Sa2, but also the equipment identification number and capability information of the base station apparatus 3. The relay station apparatus 3 performs position registration processing in the same manner as the mobile station apparatus 2, and by the relay station apparatus 3 having an equipment identification number for the relay station apparatus that is not used for the mobile station apparatus 2, the base station apparatus 1 can recognize that this is position registration processing from the relay station apparatus 3. The information that is transmitted as capability information is, for example, the type of relay that the relay station apparatus 3 handles and the specification that the relay station apparatus 3 accommodates.

Once the relay station apparatus 3 transitions to the idle mode, it is in the idle mode until reception of a paging signal from the base station apparatus 1 (No at Sa4). When this occurs, in order to reduce the current consumption, the relay station apparatus 3 may intermittently receive the paging signal. Upon reception of a paging signal addressed to itself (Yes at Sa4), the relay station apparatus 3 from the base station apparatus 1 (Yes at Sa4), measures the mobile station signal to judge whether or not there is a mobile station communicating within its own area (Sa5). When this is done, the base station apparatus 1 may notify the relay station apparatus 3 of information regarding the mobile station with which it is communicating (for example the allocated frequency) so that measurement is performed efficiency. Once the signal from the mobile station apparatus 2 is detected (Sa6), the relay station apparatus 3 makes a notification to the base station apparatus 1 to that effect (Sa7) and transitions to the operating mode (Sa8).

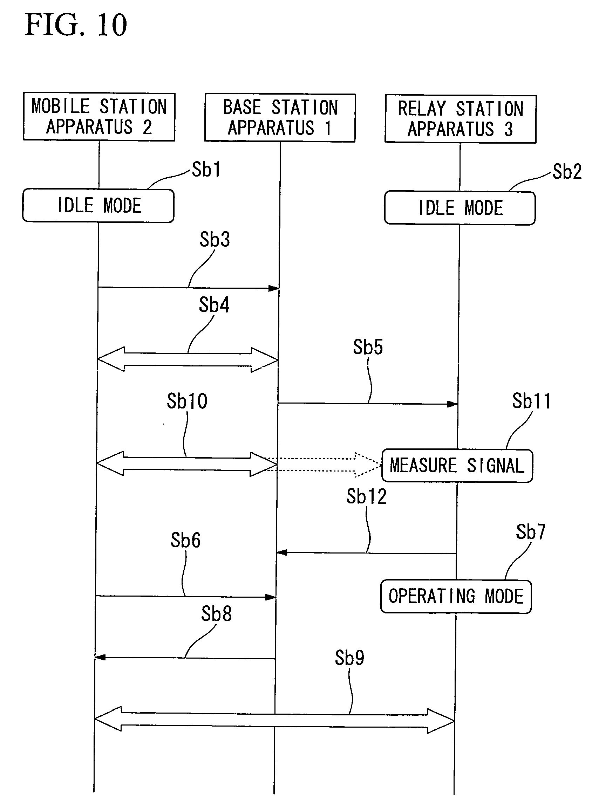

FIG. 10 is a sequence diagram showing the operation from the waiting state up until communication via the relay station apparatus 3. The relay station apparatus 3 and the mobile station apparatus 2 each perform position registration with respect to the base station apparatus 1, and are in the idle mode state (Sb1, Sb2). When this is done, the position registration information storage unit 118 of the base station apparatus 1 stores the position registration information and the equipment identification number of the relay station apparatus 3 and the position registration information and the equipment identification number of the mobile station apparatus 2. The relay station mode storage unit 119 stores that the relay station apparatus 3 is in the idle mode. Because the relay station apparatus 3 is in the idle mode, its base station addressed paging signal detecting unit 315 monitors the paging channel, including the terminal identification number read out from the storage unit 318 by the control unit 317.

At this point, the case in which a call connection is made to the base station apparatus 1 from the mobile station apparatus 2, such as when e-mail is transmitted by a user operation of the mobile station apparatus 2 will be described. A call connection request is made to the base station apparatus 1 from the mobile station apparatus 2 (Sb3: Connection request) and, if this succeeds, a communication path is established between the mobile station apparatus 2 and the base station apparatus 1 and the communication condition occurs (Sb4: Communication in progress). In this case, if wireless communication is established between the base station apparatus 1 and the mobile station apparatus 2, based on the position registration information received in advance from the relay station apparatus 30, the communication path deciding unit 120 of the base station apparatus 1 makes the judgment that communication with the mobile station apparatus 2 is possible via the relay station apparatus 3. The method of determining that communication is possible via the relay station apparatus 3 is as described below. The base station apparatus 1, based on the received power of the signal transmitted from the mobile station apparatus 2 or the information reported from the mobile station apparatus 2 (downlink signal received level) or the like, predicts the approximate position of the mobile station apparatus 2, and judges whether or not it is possible to communicate via the relay station apparatus 3. It is also possible by receiving a position information measured using GPS (Global Positioning System) or the like from the mobile station apparatus 2 to judge whether or not communication is possible via the relay station apparatus 3.

When a judgment is made that communication is possible via the relay station apparatus 3, as described above, the communication path deciding unit 120 references the relay station mode storage unit 119 and, because the relay station apparatus 3 is in the idle mode, reads out the terminal identification number of the relay station apparatus 3 from the position registration information storage unit 118 and instructs the transmission processing unit 102 to transmit a paging signal that includes that terminal identification number. At the transmission processing unit 102, the paging signal generating unit 130 thereof generates a paging signal that includes the terminal identification number specified by the communication path deciding unit 120, and transmits this via the wireless unit 104 and the antenna 111, so that the base station apparatus 1 pages the relay station apparatus 3 (Sb5: Paging).

At the relay station apparatus 3, the base station addressed paging signal detecting unit 315 detects from the signal received from the base station apparatus 1 a paging signal that includes its own terminal identification number. Additionally, when this paging signal is detected, the relay station apparatus 3 measures (Sb11) the uplink signal transmitted from the mobile station apparatus 2, which is communicating with the base station apparatus 1 (Sb10). Before the measurement, the base station apparatus 1 may notify the relay station apparatus 3 of information regarding the signal being communicated (for example, time slot or frequency information). By receiving this information, it is easy for the relay station to measure the uplink signal. The relay station apparatus 3 notifies (Sb12: Measurement result notification) the base station apparatus 1 of the result of measurement of the uplink signal of the mobile station apparatus 2. The control unit 317 of the relay station apparatus 3 transitions the overall relay station apparatus 3 from the idle mode to the operating mode (Sb7). Having gone into the operating mode, in the relay station apparatus 3, in response to going into the operating mode, the transmission determining unit 306 controls transmission control unit 305 so as to output a signal to the wireless unit 304, starting the transmission of a downlink signal that includes the synchronization signal and the reference signal. When the relay station apparatus 3 transitions into the operating mode and communication between the base station apparatus 1 and the relay station apparatus 3 is established, the control unit 117 of the base station apparatus 1 acquires communication resources for the purpose of communication with the relay station apparatus 3. The relay station apparatus 3 may start the transmission of a downlink signal after the establishment of communication with the base station apparatus 1.

In this case, the relay station apparatus 3 has a cell ID that is different from that of the base station apparatus 1, and a mobile station apparatus 2 existing in an area in which communication with the relay station apparatus 3 is possible can receive a synchronization signal and a reference signal from the relay station apparatus 3, the mobile station apparatus 2 receiving the reference signal and measuring the communication quality with the relay station apparatus 3. The mobile station apparatus 2 reports the result of measuring the communication quality to the base station apparatus 1 (Sb6: Communication quality report). The communication path deciding unit 120 of the base station apparatus 1, in accordance with, for example, whether or not the report measurement result exceeds a threshold value set ahead of time, determines whether or not the communication quality between the mobile station apparatus 2 and the relay station apparatus 3 is good. If the determination is that it is good, the control unit 117 instructs the transmission processing unit 102 to generate a handover command that instructs the mobile station apparatus 2 to handover to the relay station apparatus 3. When the transmission processing unit 102 receives this instruction, the handover instructing unit 131 thereof generates an instruction for handover from the base station apparatus 1 to the relay station apparatus 3, and transmits it via the wireless unit 104 and the antenna 111 (Sb8: handover command). The mobile station apparatus 2 that received the handover instruction from the base station apparatus 1 executes a handover sequence and, after the completion of handover to the relay station apparatus 3, continues communication with the relay station apparatus 3 (Sb9: Communication in progress).

At this point, the case in which the relay station apparatus 3 has a cell ID that is different from that of the base station apparatus 1 and in which the cell ID is assigned at the time of the registration of the position of the relay station apparatus 3 has been described. However, the cell ID may be assigned at the time of transition of the relay station apparatus 3 to the operating mode, by including the cell ID in the paging signal for the purpose of transitioning the relay station apparatus 3 from the idle mode to the operating mode.

A variation on the second embodiment, in the case in which the relay station apparatus 3 is assigned a cell ID that is the same as that of the base station apparatus 1 will be described below.

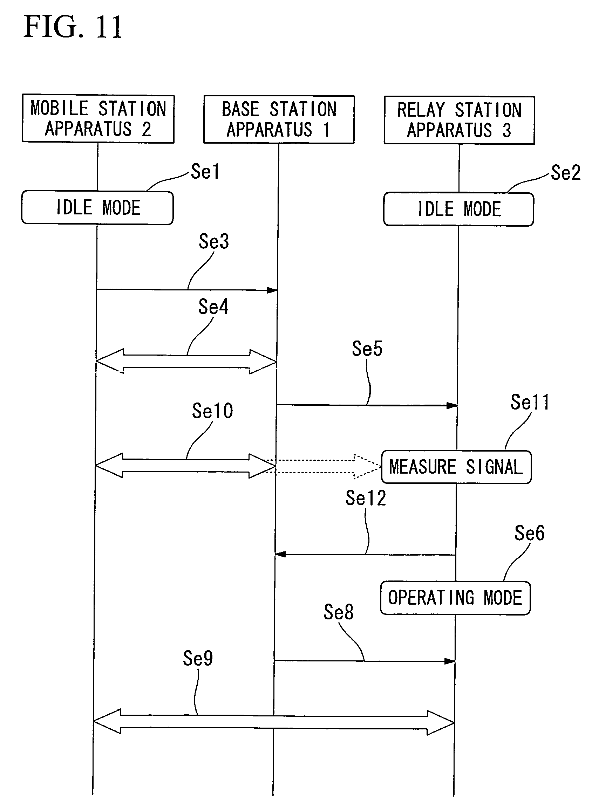

FIG. 11 is a sequence diagram of the operation of the mobile communication system 10 in the present variation. The relay station apparatus 3 and the mobile station apparatus 2 each perform position registration with respect to the base station apparatus 1, and are in the idle mode state (Se1, Se2). In the idle mode, the relay station apparatus 3 monitors the paging signal from the base station apparatus 1.

At this point, the case in which a call connection is made to the base station apparatus 1 from the mobile station apparatus 2 will be described. A call connection request is made to the base station apparatus 1 from the mobile station apparatus 2 (Se3: Connection request) and, if this succeeds, a communication path is established between the base station apparatus 1 and the mobile station apparatus 2 and the communication condition occurs (Se4: Communication in progress). In this manner, if the communication condition exists between the base station apparatus 1 and the mobile station apparatus 2, the base station apparatus 1, taking into consideration, for example, the position registration information of a relay station apparatus 3 that is in the idle condition, judges that it is possible to communicate between the base station apparatus 1 and the mobile station apparatus 2 via the relay station apparatus 3. In accordance with this judgment result, the base station apparatus 1, in order to communicate with the mobile station apparatus 2 via the relay station apparatus 3, transmits a paging signal to the relay station apparatus 3 that is in the idle state (Se5: Paging).

The relay station apparatus 3, upon reception of the paging signal from the base station apparatus 1, measures (Se11) the uplink signal transmitted from the mobile station apparatus 2, which is communicating with the base station apparatus 1 (Se10). Before the measurement, the base station apparatus 1 may notify the relay station apparatus 3 of information regarding the signal being communicated (for example, time slot or frequency information). By receiving this information, it is easy for the relay station apparatus 3 to measure the uplink signal. The relay station apparatus 3 notifies (Se12: Measurement result notification) the base station apparatus 1 of the result of measurement of the uplink signal of the mobile station apparatus 2, and the relay station apparatus 3, upon reception of the paging signal from the base station apparatus 1, transitions to the operating mode (Se6). When communication is established between the base station apparatus 1 and the relay station apparatus 3, the base station apparatus 1 acquires resources for communication with the relay station apparatus 3. The relay station apparatus 3 starts transmission of a downlink signal that includes the synchronization signal and the reference signal after the establishment of communication with the base station apparatus 1.

Consider the judgment by the base station apparatus 1 that, based on the measurement result from the relay station apparatus 3, using the relay station apparatus 3 for communication with the mobile station apparatus 2 would result in good communication quality. The base station apparatus 1 instructs the relay station apparatus 3 to start relay communication (Se8: Relay communication start). Receiving this instruction, the relay station apparatus 3 relays wireless communication between the base station apparatus 1 and the mobile station apparatus 2 (Se9: Communication in progress). When this occurs, the wireless communication between the base station apparatus 1 and the mobile station apparatus 2 can be performed using both the transmission path R1 and the transmission path R4 that are shown in FIG. 1, and can be performed using only the transmission path R4.

A program for the purpose of implementing the functions of the transmission processing unit 305, the transmission determining unit 306, the transmitting signal generating unit 307, the base station addressed paging signal detecting unit 315, and the control unit 317 shown in FIG. 2, and the transmitting signal generating unit 107 and the control unit 117 shown in FIG. 3 may be recorded in a computer-readable recording medium, a computer system being made to read in and execute the program recording in the recording medium, so as to perform the processing of the various units. The term "computer system" used herein includes an OS and hardware such as peripheral devices.

The term "computer-readable recording medium" used herein means a portable medium such as a flexible disk, an optical-magnetic disk, a ROM, or a CD-TOM, and also a storage device such as a hard disk that in built into a computer system. Additionally, the term "computer-readable recording medium" used herein includes ones that dynamically hold a program for a short period of time, such as a communication line in the case in which a program is transmitted via a network such as the Internet or a telephone line, in which case ones in which a program is temporarily held, such as in a volatile memory within a computer system that functions as a server or client. The above-noted program may be one for implementing a part of the above-noted functions, or one that implements the above-noted functions when used in combination with a program that is already recorded in a computer system.

Although the foregoing is a detailed description of embodiments of the present invention, with reference made to the drawings, the specific constitution is not restricted to these embodiments, and encompasses design changes within the scope of the spirit of the present invention.

### Reference Symbols

1: Base station apparatus
2: Mobile station apparatus
3: Relay station apparatus
4: Core network
10: Wireless communication system
101: Wireless transmitting and receiving unit
102: Transmission processing unit
103: Reception processing unit
104: Wireless unit
107: Transmitting signal generating unit
108: Reference signal generating unit
109: Synchronization signal generating unit
110: Data generating unit
111: Antenna
112: Communication unit for the core network
113: Communication processing unit
117: Control unit
118: Position registration information storage unit
119: Relay station mode storage unit
120: Communication path deciding unit
121: Relay station mode deciding unit
130: Paging signal generating unit
131: Handover instructing unit
301: Transmitting and receiving unit for the mobile station
302: Transmission processing unit
303: Reception processing unit
304: Wireless unit
305: Transmission control unit
306: Transmission determining unit
307: Transmitting signal generating unit
308: Reference signal generating unit
309: Synchronization signal generating unit
310: Data generating unit
311: Antenna for the mobile station
312: Transmitting and receiving unit for the base station
313: Transmission processing unit
314: Reception processing unit
315: Base station addressed paging signal detecting unit
316: Antenna for the base station
317: Control unit
318: Storage unit

## Claims

1. A wireless communication system (10) comprising a base station apparatus (1), a plurality of mobile station apparatuses (2) that perform wireless communication with the base station apparatus (1), and a relay station apparatus (3) that relays wireless communication between the base station apparatus (1) and at least one of the plurality of mobile station apparatuses (2), the at least one of the plurality of mobile station apparatuses (2) being allocated to the relay station apparatus, the wireless communication system (10) being **characterized in that**
the relay station apparatus (3) comprises:
a transmitting unit (301) configured to transmit, to the at least one of the plurality of mobile station apparatuses (2), a synchronization signal and a reference signal;
a control unit (317) configured to switch between an idle mode and an operating mode, the idle mode being a mode in which the synchronization signal and the reference signal are not transmitted by the transmitting unit, the operating mode being a mode in which the synchronization signal and the reference signal are transmitted by the transmitting unit (301); and
a storage unit (318) which stores at least one first equipment identification number allocated to the relay station apparatus (3),
wherein the control unit (317) is configured to switch from the operating mode to the idle mode in a case that the relay station apparatus (3) has not communicated with any mobile station apparatuses (2) among the plurality of mobile station apparatuses (2), and
wherein the control unit (317) is configured to switch from the idle mode to the operating mode in a case that the relay station apparatus (3) receives, from the base station apparatus (1), a paging signal, the paging signal including at least one second equipment identification number, the at least one second equipment identification number being the same as the at least one first equipment identification number stored in the storage unit (318).

2. The wireless communication system (10) according to claim 1, wherein the relay station apparatus is configured to repeatedly receive the paging signal.

3. The wireless communication system (10) according to claim 1, wherein, in a case that wireless communication is established between the base station apparatus (1) and the at least one of the plurality of mobile station apparatuses (2), and in a case that the base station apparatus (1) judges that the base station apparatus (1) can communicate with the mobile station apparatus (2) via the relay station apparatus (3), the judgement being performed based on first and second position registration information received in advance from the relay station apparatus (3), the first position registration information being of the at least one of the plurality of mobile station apparatuses (2), the second position registration information being of the relay station apparatus (3), the base station apparatus (1) is configured to transmit, to the relay station apparatus (3), the paging.

4. The wireless communication system (10) according to claim 1, wherein the base station apparatus (1) is configured to receive a position registration information from the relay station apparatus and to register the relay station apparatus into the base station apparatus (1), the position registration information being of the relay station apparatus (3).

5. The wireless communication system according to claim 4, wherein, upon registration of the relay station apparatus (3) into the base station apparatus (1), the base station apparatus (1) is configured to decide whether the base station apparatus (1) allocates, to the relay station apparatus (3) which transmitted the position registration information, one of a first cell identification information and a second cell identification information, the first cell identification information being same as a third cell identification information allocated to the base station apparatus (1), the second cell identification information being separately allocated to the relay station apparatus (3).

6. The wireless communication system (10) according to claim 4, wherein, upon registration of the relay station apparatus (3) to the base station apparatus (1), the base station apparatus (1) is configured to decide the one of the first cell identification information and the second cell identification information, and to notify the relay station apparatus (3) the one of the first cell identification information and the second cell identification information.

7. The wireless communication system (10) according to claim 1,
wherein the at least one of the plurality of mobile station apparatuses (2) is configured to receive the reference signal of the relay station apparatus (3), and measure a communication quality with the relay station apparatus (3) in a case that a first cell identification information is different from a second cell identification information, the first cell identification information being of the relay station apparatus (3), the second cell identification information being of the base station apparatus (1), and
wherein the base station apparatus (1) is configured to determine whether or not wireless communication with the at least one of the plurality of mobile station apparatuses (2) is performed via the relay station apparatus (3), the determining being performed based on the communication quality measured by the at least one of the plurality of mobile station apparatuses (2).

8. The wireless communication system (10) according to claim 1,
wherein the at least one of the plurality of mobile station apparatuses (2) is configured to receive the reference signal of the relay station apparatus (3), measure a first communication quality with the relay station apparatus (3), receive another reference signal of the base station apparatus (1), and measure a second communication quality with the base station apparatus (1) in a case that a first cell identification information is same as a second cell identification information, the first cell identification information being of the relay station apparatus (3), the second cell identification information being of the base station apparatus (1), and
wherein the base station apparatus (1) is configured to determine whether or not wireless communication with the at least one of the plurality of mobile station apparatuses (2) is performed via the relay station apparatus (3), the determination being performed based on the first and second communication qualities measured by the at least one of the plurality of mobile station apparatuses (2).

9. The wireless communication system (10) according to claim 1,
wherein the storage unit (318) stores one of a first cell identification information and a second cell identification information, the first cell identification information being decided, by the base station apparatus (1), based on whether or not the number of cell identification information allocatable to a plurality of relay station apparatuses (3) including the relay station apparatus (3) is less than a certain number, the second cell identification information being decided, by the base station apparatus (1), based on whether the relay station apparatus (3) is provided for expanding a service area of the base station apparatus (1) or is provided for improving a communication capacity in the service area, and
wherein the control unit (317) is configured to control a communication between the relay station apparatus (3) and the base station apparatus (1) based on the one of the first cell identification information and the second cell identification information.

10. A relay station apparatus (3) relaying wireless communication between a base station apparatus (1) and at least one of a plurality of mobile station apparatuses (2) that perform wireless communication with the base station apparatus (1), the at least one of the plurality of mobile station apparatuses (2) being allocated to the relay station apparatus (3), the relay station apparatus (3) being **characterized in that**
the relay station apparatus (3) comprises:
a transmitting unit (301) configured to transmit, to the at least one of the plurality of mobile station apparatuses (2), a synchronization signal and a reference signal;
a control unit (317) configured to switch between an idle mode and an operating mode, the idle mode being a mode in which the synchronization signal and the reference signal are not transmitted by the transmitting unit (301), the operating mode being a mode in which the synchronization signal and the reference signal are transmitted by the transmitting unit (301); and
a storage unit (318) which stores at least one first equipment identification number allocated to the relay station apparatus (3),
wherein the control unit (317) is configured to switch from the operating mode to the idle mode in a case that the relay station apparatus (3) has not communicated with any mobile station apparatuses (2) among the plurality of mobile station apparatuses (2), and
wherein the control unit (317) is configured to switch from the idle mode to the operating mode in a case that the relay station apparatus (3) receives, from the base station apparatus (1), a paging signal, the paging signal including at least one second equipment identification number, the at least one second equipment identification number being the same as the at least one first equipment identification number stored in the storage unit (318).

11. A wireless communication method in a wireless communication system (10) comprising a base station apparatus (1), a plurality of mobile station apparatuses (2) that perform wireless communication with the base station apparatus (1), and a relay station apparatus (3) that relays wireless communication between the base station apparatus (1) and at least one of the plurality of mobile station apparatuses (2), the at least one of the plurality of mobile station apparatuses (2) being allocated to the relay station apparatus (3), the wireless communication method being **characterized in that**
the wireless communication method comprises:
transmitting, by the relay station apparatus (3), to the at least one of the plurality of mobile station apparatuses (2), a synchronization signal and a reference signal;
switching, by the relay station apparatus (3), between an idle mode and an operating mode, the idle mode being a mode in which the synchronization signal and the reference signal are not transmitted by the relay station apparatus (3), the operating mode being a mode in which the synchronization signal and the reference signal are transmitted by the relay station apparatus (3); and
storing, by the relay station apparatus (3), at least one first equipment identification number allocated to the relay station apparatus (3);
switching, by the relay station apparatus (3), from the operating mode to the idle mode in a case that the relay station apparatus (3) has not communicated with any mobile station apparatuses (2) among the plurality of mobile station apparatuses (2); and
switching, by the relay station apparatus (3), from the idle mode to the operating mode in a case that the relay station apparatus (3) receives, from the base station apparatus (1), a paging signal, the paging signal including at least one second equipment identification number, the at least one second equipment identification number being same as the at least one first equipment identification number stored in the relay station apparatus (3).

## Patentansprüche

1. Drahtloskommunikationssystem (10), mit einer Basisstationseinrichtung (1), einer Mehrzahl an Mobilstationseinrichtungen (2), die eine Drahtloskommunikation mit der Basisstationseinrichtung (1) durchführen, und einer Relaisstationseinrichtung (3), die eine Drahtloskommunikation zwischen der Basisstationseinrichtung (1) und zumindest einer der Mehrzahl an Mobilstationseinrichtungen (2) weiterleitet, wobei die zumindest eine der Mehrzahl an Mobilstationseinrichtungen (2) der Relaisstationseinrichtung zugewiesen ist, wobei das Drahtloskommunikationssystem (10) **dadurch gekennzeichnet ist, dass**
die Relaisstationseinrichtung (3) umfasst:
eine Sendeeinheit (301), die dafür eingerichtet ist, an die zumindest eine der Mehrzahl an Mobilstationseinrichtungen (2) ein Synchronisierungssignal und ein Referenzsignal zu senden;
eine Steuereinheit (317), die dafür eingerichtet ist, zwischen einem Leerlaufmodus und einem Betriebsmodus zu schalten, wobei der Leerlaufmodus ein Modus ist, in welchem das Synchronisierungssignal und das Referenzsignal von der Sendeeinheit nicht gesendet werden, wobei der Betriebsmodus ein Modus ist, in welchem das Synchronisierungssignal und das Referenzsignal von der Sendeeinheit (301) gesendet werden; und
eine Speichereinheit (318), welche zumindest eine erste Gerätidentifizierungsnummer speichert, die der Relaisstationseinrichtung (3) zugewiesen ist,
wobei die Steuereinheit (317) dafür eingerichtet ist, von dem Betriebsmodus in den Leerlaufmodus in einem Fall zu schalten, in dem die Relaisstationseinrichtung (3) mit keinen Mobilstationseinrichtungen (2) unter der Mehrzahl an Mobilstationseinrichtungen (2) kommuniziert hat, und
wobei die Steuereinheit (317) dafür eingerichtet ist, von dem Leerlaufmodus in den Betriebsmodus in einem Fall zu schalten, in dem die Relaisstationseinrichtung (3) von der Basisstationseinrichtung (1) ein Paging-Signal empfängt, wobei das Paging-Signal zumindest eine zweite Gerätidentifizierungsnummer enthält, wobei die zumindest eine zweite Gerätidentifizierungsnummer die gleiche wie die zumindest eine erste Gerätidentifizierungsnummer ist, die in der Speichereinheit (318) gespeichert ist.

2. Drahtloskommunikationssystem (10) nach Anspruch 1, wobei die Relaisstationseinrichtung dafür eingerichtet ist, das Paging-Signal wiederholt zu empfangen.

3. Drahtloskommunikationssystem (10) nach Anspruch 1, wobei in einem Fall, in dem eine Drahtloskommunikation zwischen der Basisstationseinrichtung (1) und der zumindest einen der Mehrzahl an Mobilstationseinrichtungen (2) eingerichtet ist, und in einem Fall, in dem die Basisstationseinrichtung (1) beurteilt, dass die Basisstationseinrichtung (1) mit der Mobilstationseinrichtung (2) über die Relaisstationseinrichtung (3) kommunizieren kann, wobei die Beurteilung basierend auf einer ersten und zweiten Positionsregistrierungsinformation durchgeführt wird, die vorher von der Relaisstationseinrichtung (3) empfangen wurde, wobei die erste Positionsregistrierungsinformation von der zumindest einen der Mehrzahl an Mobilstationseinrichtungen (2) stammt, wobei die zweite Positionsregistrierungsinformation von der Relaisstationseinrichtung (3) stammt, die Basisstationseinrichtung (1) dafür eingerichtet ist, das Paging-Signal an die Relaisstationseinrichtung (3) zu senden.

4. Drahtloskommunikationssystem (10) nach Anspruch 1, wobei die Basisstationseinrichtung (1) dafür eingerichtet ist, eine Positionsregistrierungsinformation von der Relaisstationseinrichtung zu empfangen und die Relaisstationseinrichtung in die Basisstationseinrichtung (1) zu registrieren. wobei die Positionsregistrierungsinformation von der Relaisstationseinrichtung (3) stammt.

5. Drahtloskommunikationssystem nach Anspruch 4, wobei auf eine Registrierung der Relaisstationseinrichtung (3) in die Basisstationseinrichtung (1) hin die Basisstationseinrichtung (1) dafür eingerichtet ist, zu entscheiden, ob die Basisstationseinrichtung (1) der Relaisstationseinrichtung (3), welche die Positionsregistrierungsinformation sendete, eine einer ersten Zellenidentifizierungsinformation und einer zweiten Zellenidentifizierungsinformation zuweist, wobei die erste Zellenidentifizierungsinformation die gleiche wie eine dritte Zellenidentifizierungsinformation ist, die der Basisstationseinrichtung (1) zugewiesen ist, wobei die zweite Zellenidentifizierungsinformation der Relaisstationseinrichtung (3) separat zugewiesen ist.

6. Drahtloskommunikationssystem (10) nach Anspruch 4, wobei auf eine Registrierung der Relaisstationseinrichtung (3) zu der Basisstationseinrichtung (1) hin die Basisstationseinrichtung (1) dafür eingerichtet ist, die eine der ersten Zellenidentifizierungsinformation und der zweiten Zellenidentifizierungsinformation zu entscheiden und der Relaisstationseinrichtung (3) die eine der ersten Zellenidentifizierungsinformation und der zweiten Zellenidentifizierungsinformation zu melden.

7. Drahtloskommunikationssystem (10) nach Anspruch 1,
wobei die zumindest eine der Mehrzahl an Mobilstationseinrichtungen (2) dafür eingerichtet ist, das Referenzsignal der Relaisstationseinrichtung (3) zu empfangen und eine Kommunikationsqualität mit der Relaisstationseinrichtung (3) zu messen in einem Fall, in dem eine erste Zellenidentifizierungsinformation von einer zweiten Zellenidentifizierungsinformation verschieden ist, wobei die erste Zellentdentifizierungsinformation von der Relaisstationseinrichtung (3) stammt, wobei die zweite Zellenidentifizierungsinformation von der Basisstationseinrichtung (1) stammt, und
wobei die Basisstationseinrichtung (1) dafür eingerichtet ist, zu bestimmen, ob eine Drahtloskommunikation mit der zumindest einen der Mehrzahl an Mobilstationseinrichtungen (2) über die Relaisstationseinrichtung (3) durchgeführt wird oder nicht, wobei das Bestimmen basierend auf der von der zumindest einen der Mehrzahl an Mobilstationseinrichtungen (2) gemessenen Kommunikationsqualität durchgeführt wird.

8. Drahtloskommunikationssystem (10) nach Anspruch 1,
wobei die zumindest eine der Mehrzahl an Mobilstationseinrichtungen (2) dafür eingerichtet ist, das Referenzsignal der Relaisstationseinrichtung (3) zu empfangen, eine erste Kommunikationsqualität mit der Relaisstationseinrichtung (3) zu messen, ein anderes Referenzsignal der Basisstationseinrichtung (1) zu empfangen und eine zweite Kommunikationsqualität mit der Basisstationseinrichtung (1) zu messen, in einem Fall, in dem eine erste Zellenidentifizierungsinformation gleich wie eine zweite Zellenidentifizierungsinformation ist, wobei die erste Zellenidentifizierungsinformation von der Relaisstationseinrichtung (3) stammt, wobei die zweite Zellenidentifizierungsinformation von der Basisstationseinrichtung (1) stammt, und
wobei die Basisstationseinrichtung (1) dafür eingerichtet ist, zu bestimmen, ob eine Drahtloskommunikation mit der zumindest einen der Mehrzahl an Mobilstationseinrichtungen (2) über die Relaisstationseinrichtung (3) durchgeführt wird oder nicht, wobei die Bestimmung basierend auf den ersten und zweiten Kommunikationsqualitäten durchgeführt wird, die von der zumindest einen der Mehrzahl an Mobilstationseinrichtungen (2) gemessen wurden.

9. Drahtloskommunikationssystem (10) nach Anspruch 1,
wobei die Speichereinheit (318) eine einer ersten Zellenidentifizierungsinformation und einer zweiten Zellenidentifizierungsinformation speichert, wobei die erste Zellenidentifizierungsinformation von der Basisstationseinrichtung (1) basierend darauf entschieden wird, ob die Zahl einer Zellenidentifizierungsinformation, die einer Mehrzahl an Relaisstationseinrichtungen (3) einschließlich der Relaisstationseinrichtung (3) zuweisbar ist, geringer als eine bestimmte Zahl ist, wobei die zweite Zellenidentifizierungsinformation durch die Basisstationseinrichtung (1) basierend darauf entschieden wird, ob die Relaisstationseinrichtung (3) zum Expandieren eines Servicebereichs der Basisstationseinrichtung (1) vorgesehen ist oder zum Verbessern einer Kommunikationskapazität im Servicebereich vorgesehen ist, und
wobei die Steuereinheit (317) dafür eingerichtet ist, eine Kommunikation zwischen der Relaisstationseinrichtung (3) und der Basisstationseinrichtung (1) basierend auf der einen der ersten Zellenidentifizierungsinformation und der zweiten Zellenidentifizierungsinformation zu steuern.

10. Relaisstationseinrichtung (3), die eine Drahtloskommunikation zwischen einer Basisstationseinrichtung (1) und zumindest einer einer Mehrzahl an Mobilstationseinrichtungen (2) weiterleitet, die eine Drahtloskommunikation mit der Basisstationseinrichtung (1) durchführen, wobei die zumindest eine der Mehrzahl an Mobilstationseinrichtungen (2) der Relaisstationseinrichtung (3) zugewiesen ist, wobei die Relaisstationseinrichtung (3) **dadurch gekennzeichnet ist, dass**
die Relaisstationseinrichtung (3) umfasst:
eine Sendeeinheit (301), die dafür eingerichtet ist, an die zumindest eine der Mehrzahl an Mobilstationseinrichtungen (2) ein Synchronisierungssignal und ein Referenzsignal zu senden;
eine Steuereinheit (317), die dafür eingerichtet ist, zwischen einem Leerlaufmodus und einem Betriebsmodus zu schalten, wobei der Leerlaufmodus ein Modus ist, in welchem das Synchronisierungssignal und das Referenzsignal von der Sendeeinheit (301) nicht gesendet werden, wobei der Betriebsmodus ein Modus ist, in welchem das Synchronisierungssignal und das Referenzsignal von der Sendeeinheit (301) gesendet werden; und
eine Speichereinheit (318), welche zumindest eine erste Gerätidentifizierungsnummer speichert, die der Relaisstationseinrichtung (3) zugewiesen ist,
wobei die Steuereinheit (317) dafür eingerichtet ist, von dem Betriebsmodus in den Leerlaufmodus in einem Fall zu schalten, in dem die Relaisstationseinrichtung (3) mit keinen Mobilstationseinrichtungen (2) unter der Mehrzahl an Mobilstationseinrichtungen (2) kommuniziert hat, und
wobei die Steuereinheit (317) dafür eingerichtet ist, von dem Leerlaufmodus in den Betriebsmodus in einem Fall zu schalten, in dem die Relaisstationseinrichtung (3) von der Basisstationseinrichtung (1) ein Paging-Signal empfängt, wobei das Paging-Signal zumindest eine zweite Gerätidentifizierungsnummer enthält, wobei die zumindest eine zweite Gerätidentifizierungsnummer die gleiche wie die zumindest eine erste Gerätidentifizierungsnummer ist, die in der Speichereinheit (318) gespeichert ist.

11. Drahtloskommunikationsverfahren in einem Drahtloskommunikationssystem (10) mit einer Basisstationseinrichtung (1), einer Mehrzahl an Mobilstationseinrichtungen (2), die eine Drahtloskommunikation mit der Basisstationseinrichtung (1) durchführen, und einer Relaisstationseinrichtung (3), die eine Drahtloskommunikation zwischen der Basisstationseinrichtung (1) und zumindest einer der Mehrzahl an Mobilstationseinrichtungen (2) weiterleitet, wobei die zumindest eine der Mehrzahl an Mobilstationseinrichtungen (2) der Relaisstationseinrichtung (3) zugewiesen ist, wobei das Drahtloskommunikationsverfahren **dadurch gekennzeichnet ist, dass**
das Drahtloskommunikationsverfahren umfasst:
Senden, von der Relaisstationseinrichtung (3), eines Synchronisierungssignals und eines Referenzsignals an die zumindest eine der Mehrzahl an Mobilstationseinrichtungen (2);
Schalten, durch die Relaisstationseinrichtung (3), zwischen einem Leerlaufmodus und einem Betriebsmodus, wobei der Leerlaufmodus ein Modus ist, in welchem das Synchronisierungssignal und das Referenzsignal von der Relaisstationseinrichtung (3) nicht gesendet werden, wobei der Betriebsmodus ein Modus ist, in welchem das Synchronisierungssignal und das Referenzsignal von der Relaisstationseinrichtung (3) gesendet werden; und
Speichern, durch die Relaisstationseinrichtung (3), zumindest einer ersten Gerätidentifizierungsnummer, die der Relaisstationseinrichtung (3) zugewiesen ist;
Schalten, durch die Relaisstationseinrichtung (3), von dem Betriebsmodus in den Leerlaufmodus in einem Fall, in dem die Relaisstationseinrichtung (3) mit keinen Mobilstationseinrichtungen (2) unter der Mehrzahl an Mobilstationseinrichtungen (2) kommuniziert hat; und
Schalten, durch die Relaisstationseinrichtung (3), von dem Leerlaufmodus in den Betriebsmodus in einem Fall, in dem die Relaisstationseinrichtung (3) von der Basisstationseinrichtung (1) ein Paging-Signal empfängt, wobei das Paging-Signal zumindest eine zweite Gerätidentifizierungsnummer enthält, wobei die zumindest eine zweite Gerätidentifizierungsnummer gleich wie die zumindest eine erste Gerätidentifizierungsnummer ist, die in der Relaisstationseinrichtung (3) gespeichert ist.

## Revendications

1. Système de communication sans fil (10) comprenant un appareil de station de base (1), plusieurs appareils de station mobile (2) qui réalisent une communication sans fil avec l'appareil de station de base (1), et un appareil de station relais (3) qui relaie la communication sans fil entre l'appareil de station de base (1) et l'un au moins des appareils de station mobile (2), l'appareil ou les appareils de station mobile (2) étant affectés à l'appareil de station relais, le système de communication sans fil (10) étant **caractérisé en ce que**
l'appareil de station relais (3) comprend :
une unité de transmission (301) conçue pour transmettre à l'appareil ou aux appareils de station mobile (2) un signal de synchronisation et un signal de référence ;
une unité de commande (317) conçue pour la commutation entre un mode inactif et un mode actif, le mode inactif étant un mode dans lequel le signal de synchronisation et le signal de référence ne sont pas transmis par l'unité de transmission, le mode actif étant un mode dans lequel le signal de synchronisation et le signal de référence sont transmis par l'unité de transmission (301) ; et
une unité de mémoire (318) qui stocke au moins un premier numéro d'identification d'équipement affecté à l'appareil de station relais (3),
étant précisé que l'unité de commande (317) est conçue pour la commutation du mode actif au mode inactif dans un cas où l'appareil de station relais (3) n'a communiqué avec aucun des appareils de station mobile (2), et
que l'unité de commande (317) est conçue pour la commutation du mode inactif au mode actif dans un cas où l'appareil de station relais (3) reçoit de l'appareil de station de base (1) un signal de radiomessagerie, le signal de radiomessagerie contenant au moins un deuxième numéro d'identification d'équipement, le ou les deuxièmes numéros d'identification d'équipement étant les mêmes que le ou les premiers numéros d'identification d'équipement stockés dans l'unité de mémoire (318).

2. Système de communication sans fil (10) selon la revendication 1, étant précisé que l'appareil de station relais est conçu pour recevoir le signal de radiomessagerie à plusieurs reprises.

3. Système de communication sans fil (10) selon la revendication 1, étant précisé que dans un cas où une communication sans fil est établie entre l'appareil de station de base (1) et l'appareil ou les appareils de station mobile (2), et dans un cas où l'appareil de station de base (1) estime qu'il peut communiquer avec l'appareil de station mobile (2) par l'intermédiaire de l'appareil de station relais (3), cette estimation étant faite sur la base de premières et deuxièmes informations d'enregistrement de position reçues à l'avance à partir de l'appareil de station relais (3), les premières informations d'enregistrement de position étant de l'appareil ou des appareils de station mobile (2) et les deuxièmes informations d'enregistrement de position étant de l'appareil de station relais (3), l'appareil de station de base (1) est conçu pour transmettre à l'appareil de station relais (3) l'appel de radiomessagerie.

4. Système de communication sans fil (10) selon la revendication 1, étant précisé que l'appareil de station de base (1) est conçu pour recevoir des informations d'enregistrement de position à partir de l'appareil de station relais, et pour enregistrer l'appareil de station relais dans l'appareil de station de base (1), les informations d'enregistrement de position étant de l'appareil de station relais (3).

5. Système de communication sans fil (10) selon la revendication 4, étant précisé que lors de l'enregistrement de l'appareil de station relais (3) dans l'appareil de station de base (1), ledit appareil de station de base (1) est conçu pour décider s'il affecte à l'appareil de station relais (3) qui a transmis les informations d'enregistrement de position des premières informations d'identification de cellule ou des deuxièmes informations d'identification de cellule, les premières informations d'identification de cellule étant les mêmes que des troisièmes informations d'identification de cellule affectées à l'appareil de station de base (1), les deuxièmes informations d'identification de cellule étant affectées séparément à l'appareil de station relais (3).

6. Système de communication sans fil (10) selon la revendication 4, étant précisé que lors de l'enregistrement de l'appareil de station relais (3) dans l'appareil de station de base (1), ledit appareil de station de base (1) est conçu pour se décider pour les premières informations d'identification de cellule ou les deuxièmes informations d'identification de cellule, et pour signaler à l'appareil de station relais (3) les premières informations d'identification de cellule ou les deuxièmes informations d'identification de cellule.

7. Système de communication sans fil (10) selon la revendication 1, étant précisé que l'appareil ou les appareils de station mobile (2) sont conçus pour recevoir le signal de référence de l'appareil de station relais (3) et pour mesurer une qualité de communication avec celui-ci dans un cas où des premières informations d'identification de cellule sont différentes de deuxièmes informations d'identification de cellule, les premières informations d'identification de cellule étant de l'appareil de station relais (3), les deuxièmes informations d'identification de cellule étant de l'appareil de station de base (1), et
que l'appareil de station de base (1) est conçu pour déterminer si une communication sans fil avec l'appareil ou les appareils de station mobile (2) est réalisée ou non par l'intermédiaire de l'appareil de station relais (3), cette détermination étant réalisée sur la base de la qualité de communication, mesurée par l'appareil ou les appareils de station mobile (2).

8. Système de communication sans fil (10) selon la revendication 1, étant précisé
que l'appareil ou les appareils de station mobile (2) sont conçus pour recevoir le signal de référence de l'appareil de station relais (3), pour mesurer une première qualité de communication avec l'appareil de station relais (3), pour recevoir un autre signal de référence de l'appareil de station de base (1), et pour mesurer une deuxième qualité de communication avec l'appareil de station de base (1) dans un cas où des premières informations d'identification de cellule sont les mêmes que des deuxièmes informations d'identification de cellule, les premières informations d'identification de cellule étant de l'appareil de station relais (3), les deuxièmes informations d'identification de cellule étant de l'appareil de station de base (1), et
que l'appareil de station de base (1) est conçu pour déterminer si une communication sans fil avec l'appareil ou les appareils de station mobile (2) est réalisée ou non par l'intermédiaire de l'appareil de station relais (3), la détermination étant réalisée sur la base des première et deuxième qualités de communication, mesurées par l'appareil ou les appareils de station mobile (2).

9. Système de communication sans fil (10) selon la revendication 1, étant précisé
que l'unité de mémoire (318) stocke des premières informations d'identification de cellule ou des deuxièmes informations d'identification de cellule, les premières informations d'identification de cellule étant décidées, par l'appareil de station de base (1), suivant que le nombre d'informations d'identification aptes à être affectées à plusieurs appareils de station relais (3) comprenant l'appareil de station relais (3) est inférieur ou non à un certain nombre, les deuxièmes informations d'identification de cellule étant décidées, par l'appareil de station de base (1), suivant que l'appareil de station relais (3) est prévu pour étendre une zone de service de l'appareil de station de base (1) ou est prévu pour améliorer une capacité de communication dans la zone de service, et
que l'unité de commande (317) est conçue pour commander une communication entre l'appareil de station relais (3) et l'appareil de station de base (1) sur la base des premières informations d'identification de cellule ou des deuxièmes informations d'identification de cellule.

10. Appareil de station relais (3) relayant une communication sans fil entre un appareil de station de base (1) et au moins un appareil de station mobile (2) qui réalise une communication sans fil avec ledit appareil de station de base (1), l'appareil ou les appareils de station mobile (2) étant affectés à l'appareil de station relais (3), ledit appareil de station relais (3) étant **caractérisé en ce que**
l'appareil de station relais (3) comprend :
une unité de transmission (301) conçue pour transmettre à l'appareil ou aux appareils de station mobile (2) un signal de synchronisation et un signal de référence ;
une unité de commande (317) conçue pour la commutation entre un mode inactif et un mode actif, le mode inactif étant un mode dans lequel le signal de synchronisation et le signal de référence ne sont pas transmis par l'unité de transmission (301), le mode actif étant un mode dans lequel le signal de synchronisation et le signal de référence sont transmis par l'unité de transmission (301) ; et
une unité de mémoire (318) qui stocke au moins un premier numéro d'identification d'équipement affecté à l'appareil de station relais (3),
étant précisé que l'unité de commande (317) est conçue pour la commutation du mode actif au mode inactif dans un cas où l'appareil de station relais (3) n'a communiqué avec aucun des appareils de station mobile (2), et
que l'unité de commande (317) est conçue pour la commutation du mode inactif au mode actif dans un cas où l'appareil de station relais (3) reçoit de l'appareil de station de base (1) un signal de radiomessagerie, le signal de radiomessagerie contenant au moins un deuxième numéro d'identification d'équipement, le ou les deuxièmes numéros d'identification d'équipement étant les mêmes que le ou les premiers numéros d'identification d'équipement stockés dans l'unité de mémoire (318).

11. Procédé de communication sans fil dans un système de communication sans fil (10) comprenant un appareil de station de base (1), plusieurs appareils de station mobile (2) qui réalisent une communication sans fil avec l'appareil de station de base (1), et un appareil de station relais (3) qui relaie la communication sans fil entre l'appareil de station de base (1) et l'un au moins des appareils de station mobile (2), l'appareil ou les appareils de station mobile (2) étant affectés à l'appareil de station relais (3), le procédé de communication sans fil étant **caractérisé en ce que**
le procédé de communication sans fil comprend :
la transmission, par l'appareil de station relais (3) à l'appareil ou aux appareils de station mobile (2), d'un signal de synchronisation et d'un signal de référence ;
la commutation, par l'appareil de station relais (3), entre un mode inactif et un mode actif, le mode inactif étant un mode dans lequel le signal de synchronisation et le signal de référence ne sont pas transmis par l'appareil de station relais (3), le mode actif étant un mode dans lequel le signal de synchronisation et le signal de référence sont transmis par l'appareil de station relais (3) ; et
le stockage, par l'appareil de station relais (3), d'au moins un premier numéro d'identification d'équipement affecté à l'appareil de station relais (3),
la commutation, par l'appareil de station relais (3), du mode actif au mode inactif dans un cas où l'appareil de station relais (3) n'a communiqué avec aucun des appareils de station mobile (2), et
la commutation, par l'appareil de station relais (3), du mode inactif au mode actif dans un cas où l'appareil de station relais (3) reçoit de l'appareil de station de base (1) un signal de radiomessagerie, le signal de radiomessagerie contenant au moins un deuxième numéro d'identification d'équipement, le ou les deuxièmes numéros d'identification d'équipement étant les mêmes que le ou les premiers numéros d'identification d'équipement stockés dans l'appareil de station relais (3).
